# EUROPEAN PATENT APPLICATION

(11) **EP 4 759 539 A1**
(43) Date of publication of application: **17.06.2026**
(21) Application number: 24827709.7
(22) Date of filing: 06.11.2024
(51) Int. Cl.: B32B 37/06, B32B 37/10, B32B 37/00, B32B 37/12, B32B 38/00, B65G 13/07

(54) **AIRBAG CONTACT LAMINATING MACHINE, SINGLE-LAYER DOUBLE-CHAMBER LAMINATING MACHINE FORMED THEREBY, AND SYSTEM**

(30) Priority: 31.10.2024 CN 202411534832
(71) Applicant: Qinhuangdao Shengcheng Automation Equipment Co., Ltd., Qinhuangdao, Hebei 066006 (CN)
(72) Inventor: DONG, Weibing, Qinhuangdao, Hebei 066006 (CN); LI, Shuopeng, Qinhuangdao, Hebei 066006 (CN); WANG, Yuliang, Qinhuangdao, Hebei 066006 (CN); SHANG, Ju, Qinhuangdao, Hebei 066006 (CN); ZHOU, Mingzhen, Qinhuangdao, Hebei 066006 (CN); ZHANG, Cheng, Qinhuangdao, Hebei 066006 (CN); ZHANG, Pengfei, Qinhuangdao, Hebei 066006 (CN)
(74) Representative: Valet Patent Services Limited
(86) International application number: PCT/CN2024/130220
(87) International publication number: WO 2026/091160

(57) **Abstract**

An airbag contact type laminator and its corresponding single-layer dual-chamber laminator and system are disclosed. The airbag contact type laminator includes a frame, an airbag type heating laminating device, multiple hydraulic cylinders, a lower heating plate, and a vacuum and inflation system. The airbag type heating laminating device is installed on the frame through the multiple peripheral hydraulic cylinders. The lower heating plate is horizontally fixed on the support frame of the frame and corresponds to the position of the airbag type heating laminating device above it, thus a vacuum laminating chamber is formed when the airbag type heating laminating device presses against the lower heating plate. The vacuum and inflation system is connected to and in communication with the airbag type heating laminating device, and communicates with the vacuum laminating chamber through the lower heating plate.

## Description

### TECHNICAL FIELD

The present disclosure relates to the technical field of laminator technology, and more specifically to an airbag contact type laminator, its corresponding single-layer dual-chamber laminator and system.

### BACKGROUND ART

Solar cell module laminators are essential equipment for the encapsulation of solar cell modules. During the manufacturing process, the laminator is required to press together the adhesive film, solar cell sheet, tempered glass, and back film under vacuum and high temperature conditions to form a certain rigid whole.

However, current laminators face several technical issues:
1) Current laminators use silicone rubber plates for lamination operations, as disclosed in the patent CN114834138B titled as Automatic Stack Type Multi-Layer Laminator, which features two adjacent lamination components (upper box and lower box) that form first and second vacuum chambers isolated by a silicone rubber plate when pressed together. On one hand, using two lamination components (upper box and lower box) with the same structure results in a complex structure with many parts; on the other hand, the silicone rubber plate moves downward and stretches out during vacuumization and inflation, which is easy to be damaged and requires frequent replacement, repair and replacement, increasing the cost.
2) Most laminators currently operate with a single chamber, processing one solar panel at a time. This means that any damage to the single chamber can halt production, resulting in low efficiency and poor reliability. Additionally, the quality is compromised by only undergoing a single lamination process.

Therefore, it is urgent for those skilled in the art to provide a simple, reliable, and efficient airbag contact type laminator and its corresponding single-layer dual-chamber laminator and system.

### SUMMARY

In view of the above, the present disclosure provides an airbag contact type laminator and its corresponding single-layer dual-chamber laminator and system, so as to solve at least one of the technical problems mentioned in the above background technical part.

In order to achieve the above purpose, the present disclosure adopts the following technical solutions:

An airbag contact type laminator includes a frame, an airbag type heating laminating device, multiple hydraulic cylinders, a lower heating plate, and a vacuum and inflation system, wherein the airbag type heating laminating device is installed on the frame through the multiple peripheral hydraulic cylinders; the lower heating plate is horizontally fixed on a support frame of the frame and corresponds to a position of the airbag type heating laminating device thereabove, thus forming a vacuum laminating chamber when the airbag type heating laminating device presses against the lower heating plate; the vacuum and inflation system is connected to and in communication with the airbag type heating laminating device, and also communicates with the vacuum laminating chamber through the lower heating plate.

Through the adoption of the above technical solution, the beneficial effects of this disclosure are as follows:
The hydraulic cylinders drive the airbag type heating laminating device to move up and down. When it presses against the lower heating plate, a vacuum lamination chamber is formed between them. This means that only one vacuum lamination chamber is used to perform the lamination of solar cell modules, eliminating the need for an upper box structure and silicone rubber plates, simplifying the structure, avoiding frequent replacement and maintenance of silicone rubber plates, saving costs, and improving work efficiency.

Further, the airbag type heating laminating device includes a side frame, an upper heating plate, multiple airbags, an aluminum plate, and a silicone rubber pad, a body of each the hydraulic cylinder is vertically installed on the frame, and a piston rod of each the hydraulic cylinder is fixedly connected to the side frame through a connecting frame, when a bottom end of the side frame presses against the lower heating plate, the vacuum laminating chamber is formed inside the side frame; the upper heating plate is located at a top of the side frame and is connected by a fastening component; tops of the multiple airbags are fixedly connected to the upper heating plate and evenly distributed, the vacuum and inflation system is connected to the multiple airbags; the aluminum plate is installed at bottom ends of the multiple airbags; the silicone rubber pad is laid at a bottom of the aluminum plate.

The beneficial effects of the further technical solution described above are as follows: When the bottom end of the side frame presses against the lower heating plate, the lower plate and the upper heating plate start heating. Then, when the vacuum and inflation system begins inflating into the airbags, the compressed air will exert pressure on the airbags, forcing them to move downward with the aluminum plate and silicone rubber pad until they tightly press against the solar cell module for lamination.

Further, a top end and a bottom end of the side frame both have sealing grooves, and sealing rings are installed in both sealing grooves.

This further technical solution enhances the sealing between the side frame and the upper heating plate, as well as between the side frame and the lower heating plate when they press against each other.

Further, the vacuum and inflation system includes a vacuum pump, a vacuum connection pipeline, a first vacuum pipeline, a second vacuum pipeline, a corrugated expansion pipe, a vacuum inflation pipeline, and a compressed air system, one end of the vacuum connection pipeline is connected to the vacuum pump, and the other end is connected to the first vacuum pipeline and the second vacuum pipeline through a tee joint, the first vacuum pipeline has a first electromagnetic valve installed, and the second vacuum pipeline has a second electromagnetic valve installed; multiple extension ends of the first vacuum pipeline communicate with the vacuum laminating chamber through multiple suction holes in the lower heating plate; an extension end of the second vacuum pipeline communicates with the vacuum inflation pipeline through the corrugated expansion pipe; multiple extension ends of the vacuum inflation pipeline penetrate the upper heating plate and communicates with the multiple airbags respectively; the vacuum inflation pipeline has a third electromagnetic valve installed; the compressed air system connects to and communicates with the vacuum inflation pipeline through the second vacuum pipeline and the corrugated expansion pipe, and the compressed air system is connected to the second vacuum pipeline near an output end.

The beneficial effects of the further technical solution described above are as follows: Opening the first electromagnetic valve allows the vacuum pump to perform vacuum operation in the vacuum lamination chamber through the vacuum connection pipeline and the first vacuum pipeline. Opening the second and third electromagnetic valves enables the vacuum pump to perform vacuum operation in each airbag through the vacuum connection pipeline, second vacuum pipeline, corrugated expansion pipe, and vacuum inflation pipeline. Closing the second electromagnetic valve and opening the third electromagnetic valve allows the compressed air system to fill compressed air into each airbag through the second vacuum pipeline, corrugated expansion pipe, and vacuum inflation pipeline. The above achieves the integration of vacuum and inflation pipelines.

Further, the upper heating plate includes three upper heating plate units, the three upper heating plate units are arranged sequentially along the top of the side frame; correspondingly, the aluminum plate includes three aluminum plate units, the three aluminum plate units are respectively installed at bottoms of the multiple airbags on the three upper heating plate units; the silicone rubber pad includes three silicone rubber pad units, the three silicone rubber pad units are respectively laid and fixed at bottoms of the three aluminum plate units; the vacuum inflation pipeline includes three vacuum inflation pipeline units and a total input pipeline, a top end of the corrugated expansion pipe connects to the three vacuum inflation pipeline units respectively through the total input pipeline, and each the vacuum inflation pipeline unit has a third electromagnetic valve installed.

The beneficial effects of the further technical solution described above are as follows: the lamination area is divided into three sections, which allows for the simultaneous lamination of multiple solar panels, and improves efficiency. If one airbag is damaged, other areas can continue lamination, enhancing reliability. Additionally, users can choose their own lamination areas and the number of components to be laminated based on their needs, improving applicability.

Further, both the upper heating plate and the lower heating plate are electrically connected to an electromagnetic heating control cabinet located outside the frame through multiple heat-resisting conductors.

The beneficial effects of the further technical solution described above are as follows: This external placement of the electromagnetic heating components facilitates their maintenance and repair, avoiding disassembly of the heating plates and internal repairs on the frame.

An airbag contact type single-layer dual-chamber laminator includes a conveying mechanism and two the airbag contact type laminators as described above. The two airbag contact type laminators are arranged from left to right in alignment; the conveying mechanism is installed on the frames of the two airbag contact type laminators to form a conveying channel between the side frame and the lower heating plate.

By adopting the above technical solution, the beneficial effects of this disclosure are as follows:
The two airbag contact type laminators form two chambers. One chamber mainly performs vacuum and bubble removal processes, while the second chamber carries out adhesive film curing process on the basis of the first chamber. Through two times of lamination, the product quality and production efficiency are improved simultaneously.

Further, the conveying mechanism includes an input end upper power drum group, an input end lower power drum group, an output end upper power drum group, an output end lower power drum group, an upper chain transmission mechanism, a lower chain transmission mechanism, an upper high-temperature cloth bar, a lower high-temperature bar, an upper high-temperature cloth, and a lower high-temperature cloth, the input end upper power drum group and the output end upper power drum group are respectively installed on an input side and an output side of the frame and are connected through the upper chain transmission mechanism; the input end lower power drum group and the output end lower power drum group are respectively installed on the input side and the output side of the frame and are connected through the lower chain transmission mechanism, and the input end lower power drum group is located below the input end upper power drum group, and the output end lower power drum group is located below the output end upper power drum group; the upper high-temperature cloth bar is fixed on the upper chain transmission mechanism; the lower high-temperature cloth bar is fixed on the lower chain transmission mechanism; the upper high-temperature cloth is fixed on the upper high-temperature cloth bar and is draped over the airbag type heating laminating device; the lower high-temperature cloth is fixed on the lower high-temperature cloth bar and is draped over the lower heating plate, thereby forming a conveying channel between the upper high-temperature cloth and the lower high-temperature cloth.

Further, the airbag contact type single-layer dual-chamber laminator includes a transition plate, and the transition plate is installed at a junction of the two frames and is located inside the lower high-temperature cloth.

The beneficial effect of adopting the further technical solution above is to improve the transmission reliability.

An airbag contact type single-layer dual-chamber laminator system includes a feeding table, a discharging table, and the airbag contact type single-layer dual-chamber laminator as described above, and the feeding table and the discharging table are respectively located on an input side and an output side of the airbag contact type single-layer dual-chamber laminator.

By adopting the above technical solution, the beneficial effects of this disclosure are as follows:
The disclosure integrates feeding, laminating, and discharging functions into one system, which provides a continuous production process, reduces labor and improves production efficiency.

### BRIEF DESCRIPTION OF THE DRAWINGS

To more clearly illustrate the technical solutions of the embodiments of the present disclosure or in the existing technology, a brief introduction to the figures needed for describing the embodiments or the existing technology will be provided below. It should be obvious that the figures described below are merely embodiments of this disclosure. For those skilled in the art, other figures can be obtained based on the provided figures without creative effort.
FIG. 1 is a schematic perspective view of an airbag contact type laminator provided by the present disclosure;
FIG.2 is a front view of an airbag contact type laminator provided by the present disclosure;
FIG. 3 is a schematic perspective view of the cooperation between the airbag type heating laminating device and the lower heating plate provided by the present disclosure;
FIG. 4 is a schematic perspective view of the airbag type heating laminating device provided by the present disclosure;
FIG. 5 is an exploded view of the airbag type heating laminating device provided by the present disclosure;
FIG. 6 is a schematic perspective view of the airbag provided by the present disclosure;
FIG. 7 is an exploded view of the airbag provided by the present disclosure;
FIG. 8 is a schematic perspective view of the vacuum inflation pipeline unit provided by the present disclosure;
FIG. 9 is a schematic perspective view of the frame provided by the present disclosure;
FIG. 10 is a schematic perspective view of an airbag contact type single-layer dual-chamber laminator provided by the present disclosure;
FIG. 11 is a schematic perspective view of the cooperation between two frames provided by the present disclosure;
FIG. 12 is a schematic perspective view of an airbag contact type single-layer dual-chamber laminator system provided by the present disclosure;
FIG. 13 is a front view of an airbag contact type single-layer dual-chamber laminator system provided by the present disclosure.

### DETAILED DESCRIPTION OF THE EMBODIMENTS

The following will describe the technical solutions in the embodiments of the present disclosure clearly and completely with reference to the accompanying drawings. Obviously, the described embodiments are merely a part of the embodiments of the present disclosure, not all of them. Based on the embodiments of the present disclosure, all other embodiments obtained by those skilled in the art without creative labor fall within the scope of protection of the present disclosure.

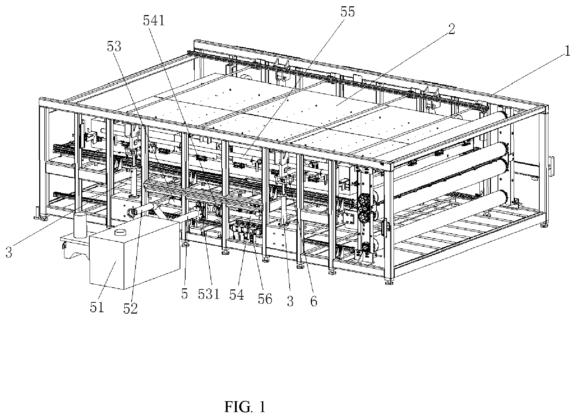

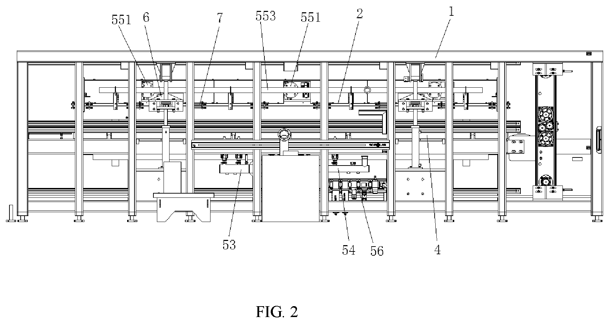

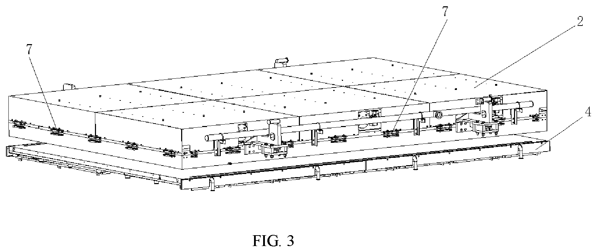

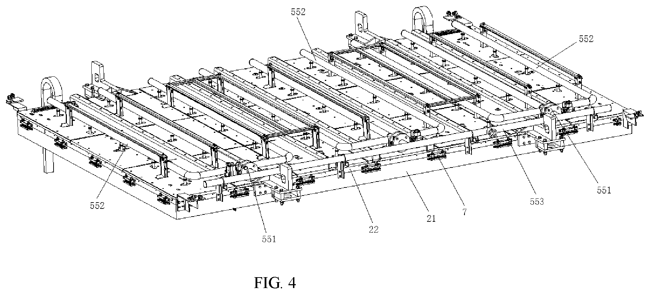

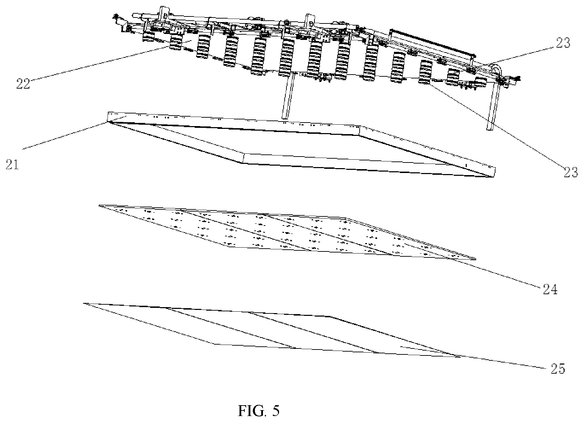

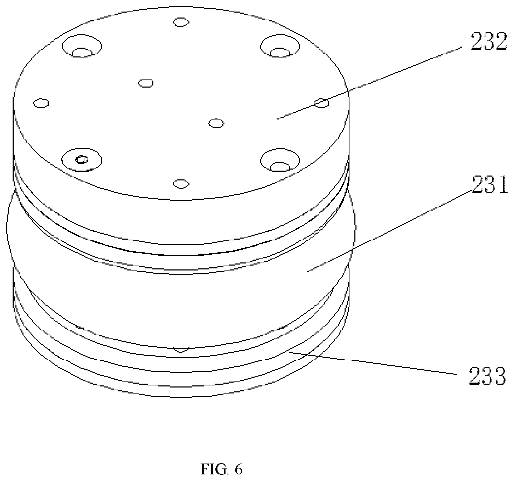

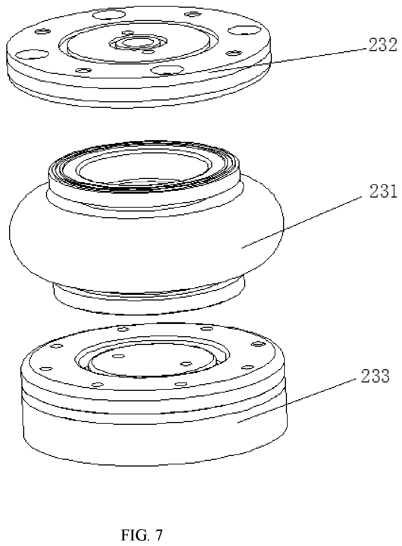

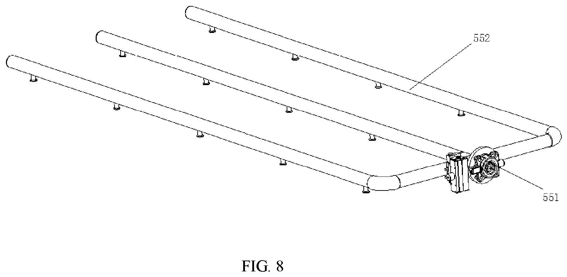

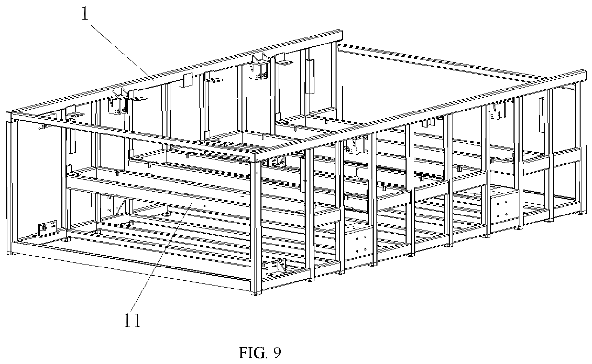

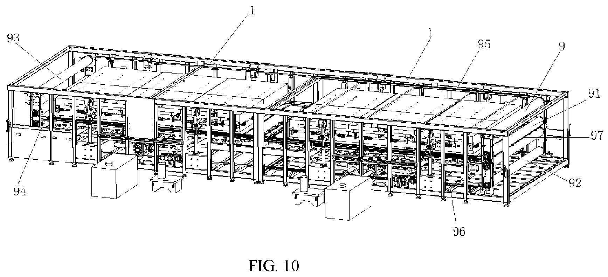

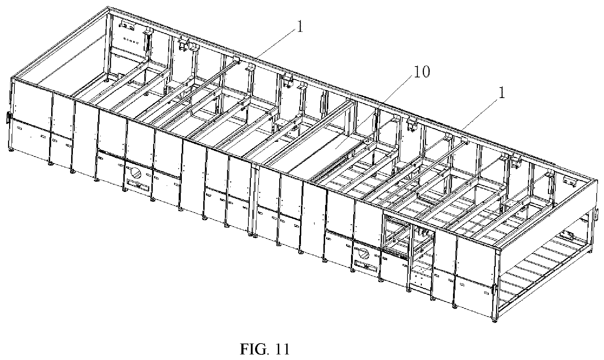

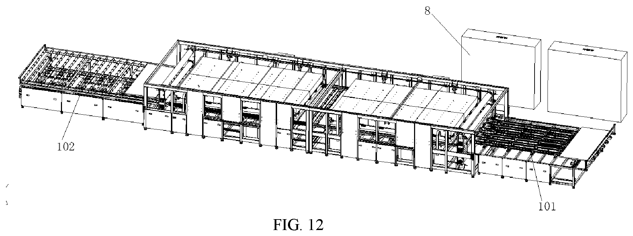

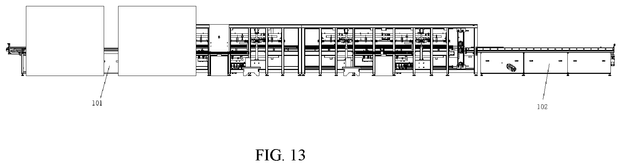

As shown in FIG. 1 to FIG. 13, the present disclosure provides an airbag contact type laminator, including a frame 1, an airbag type heating laminating device 2, multiple hydraulic cylinders 3, a lower heating plate 4, and a vacuum and inflation system 5. The airbag type heating laminating device 2 is installed on the frame 1 through the multiple peripheral hydraulic cylinders 3; the lower heating plate 4 is horizontally fixed on a support frame 11 of the frame 1 and corresponds to a position of the airbag type heating laminating device 2 thereabove, thus forming a vacuum laminating chamber when the airbag type heating laminating device 2 presses against the lower heating plate 4; the vacuum and inflation system 5 is connected to and in communication with the airbag type heating laminating device 2, and also communicates with the vacuum laminating chamber through the lower heating plate 4. In the present disclosure, the hydraulic cylinders 3 drive the airbag type heating laminating device 2 to move up and down. When it presses against the lower heating plate 4, a vacuum lamination chamber is formed between them. This means that only one vacuum lamination chamber is used to perform the lamination of solar cell modules, eliminating the need for an upper box structure and silicone rubber plates, simplifying the structure, avoiding frequent replacement and maintenance of silicone rubber plates, saving costs, and improving work efficiency.

Specifically, the airbag type heating laminating device 2 includes a side frame 21, an upper heating plate 22, multiple airbags 23, an aluminum plate 24, and a silicone rubber pad 25, a body of each the hydraulic cylinder 3 is vertically installed on the frame 1, and a piston rod of each the hydraulic cylinder 3 is fixedly connected to the side frame 21 through a connecting frame 6, when a bottom end of the side frame 21 presses against the lower heating plate 4, the vacuum laminating chamber is formed inside the side frame 21; the upper heating plate 22 is located at a top of the side frame 21 and is connected by a fastening component 7; tops of the multiple airbags 23 are fixedly connected to the upper heating plate 22 and evenly distributed, the vacuum and inflation system 5 is connected to the multiple airbags 23; the aluminum plate 24 is installed at bottom ends of the multiple airbags 23; the silicone rubber pad 25 is laid at a bottom of the aluminum plate 24. During operation, when the bottom end of the side frame 21 presses against the lower heating plate 4, the lower heating plate 4 and upper heating plate 22 begin to heat up. Then, as the vacuum and inflation system 5 starts inflating the interior of the airbags 23, the compressed air exerts pressure on the airbags 23, forcing them to move the aluminum plate 24 and silicone rubber pad 25 downward until they tightly contact the solar cell modules for laminating operations.

Specifically, the airbag 23 includes an integrally formed airbag body 231, an upper flange 232, and a lower flange 233. The upper flange 232 is connected to the upper heating plate 22 via bolts, and the lower flange 233 is connected to the aluminum plate 24 via bolts. Of course, the airbag body 231 is made of high-temperature resistant flexible material to improve its heat resistance.

To further optimize the technical solution of this disclosure, sealing grooves are provided at both the top end and bottom end of the side frame 21. Sealing rings are installed in both sealing grooves to enhance the sealing between the side frame 21 and the upper heating plate 22, as well as between the side frame 21 and the lower heating plate 4 when the press against each other.

To further optimize the technical solution of this disclosure, to protect the components inside the frame 1 from damage, a protective plate can be installed on the periphery of the frame 1.

Specifically, the vacuum and inflation system 5 includes a vacuum pump 51, a vacuum connection pipeline 52, a first vacuum pipeline 53, a second vacuum pipeline 54, a corrugated expansion pipe (not shown in the figure), a vacuum inflation pipeline 55, and a compressed air system 56, one end of the vacuum connection pipeline 52 is connected to the vacuum pump 51, and the other end of the vacuum connection pipeline 52 is connected to the first vacuum pipeline 53 and the second vacuum pipeline 54 through a tee joint, the first vacuum pipeline 53 has a first electromagnetic valve 531 installed, and the second vacuum pipeline 54 has a second electromagnetic valve 541 installed; multiple extension ends of the first vacuum pipeline 53 communicate with the vacuum laminating chamber through multiple suction holes in the lower heating plate 4; an extension end of the second vacuum pipeline 54 communicates with the vacuum inflation pipeline 55 through the corrugated expansion pipe; multiple extension ends of the vacuum inflation pipeline 55 penetrate the upper heating plate 22 and communicates with the multiple airbags 23 respectively; the vacuum inflation pipeline 55 has a third electromagnetic valve 551 installed; the compressed air system 56 connects to and communicates with the vacuum inflation pipeline 55 through the second vacuum pipeline 54 and the corrugated expansion pipe, and the compressed air system 56 is connected to the second vacuum pipeline 54 near an output end. During operation, opening the first electromagnetic valve 531 allows the vacuum pump 51 to perform vacuum operation in the vacuum lamination chamber through the vacuum connection pipeline 52 and the first vacuum pipeline 53. Opening the second electromagnetic valve 541 and third electromagnetic valve 551 enables the vacuum pump 51 to perform vacuum operation in each airbag 23 through the vacuum connection pipeline 52, second vacuum pipeline 54, corrugated expansion pipe, and vacuum inflation pipeline 55. Closing the second electromagnetic valve 541 and opening the third electromagnetic valve 551 allows the compressed air system 56 to fill compressed air into each airbag 23 through the second vacuum pipeline 54, corrugated expansion pipe, and vacuum inflation pipeline 55. The above achieves the integration of vacuum and inflation pipelines.

Specifically, the upper heating plate 22 includes three upper heating plate units, the three upper heating plate units are arranged sequentially along the top of the side frame 21; correspondingly, the aluminum plate 24 includes three aluminum plate units, the three aluminum plate units are respectively installed at bottoms of the multiple airbags 23 on the three upper heating plate units, and in the present embodiment, the fifteen airbags 23 are a group; the silicone rubber pad 25 includes three silicone rubber pad units, the three silicone rubber pad units are respectively laid and fixed at bottoms of the three aluminum plate units; the vacuum inflation pipeline 55 includes three vacuum inflation pipeline units 552 and a total input pipeline 553, a top end of the corrugated expansion pipe connects to the three vacuum inflation pipeline units 552 respectively through the total input pipeline 553, and each the vacuum inflation pipeline unit 553 has a third electromagnetic valve 551 installed. Thereby, the laminating area is divided into three sections, which allows for the simultaneous lamination of multiple solar cell panels, and improves efficiency. If one airbag 23 is damaged, other areas can continue laminating, enhancing reliability. Additionally, users can choose their own lamination areas and the number of components to be laminated according to their needs, improving applicability.

To further optimize the technical solution of this disclosure, both the upper heating plate 22 and the lower heating plate 4 are electrically connected to an electromagnetic heating control cabinet 8 located outside the frame 1 through multiple heat-resisting conductors. By externalizing the electromagnetic heating components, maintenance and repairs become more convenient, which avoids disassembly of the heating plates and internal repairs on the frame 1.

This disclosure also provides an airbag contact type single-layer dual-chamber laminator, which includes a conveying mechanism 9 and two the airbag contact type laminators as described above. The two airbag contact type laminators are arranged from left to right in alignment; the conveying mechanism 9 is installed on the frames 1 of the two airbag contact type laminators to form a conveying channel between the side frame 21 and the lower heating plate 4. The two airbag contact type laminators of the present disclosure form two chambers. One chamber mainly performs vacuum and bubble removal processes, while the second chamber carries out adhesive film curing process on the basis of the first chamber. Through two times of lamination, the product quality and production efficiency are improved simultaneously.

Specifically, the conveying mechanism 9 includes an input end upper power drum group 91, an input end lower power drum group 92, an output end upper power drum group 93, an output end lower power drum group 94, an upper chain transmission mechanism 95, a lower chain transmission mechanism 96, an upper high-temperature cloth bar 97, a lower high-temperature bar, an upper high-temperature cloth, and a lower high-temperature cloth, the input end upper power drum group 91 and the output end upper power drum group 93 are respectively installed on an input side and an output side of the frame 1 and are connected through the upper chain transmission mechanism 95; the input end lower power drum group 92 and the output end lower power drum group 94 are respectively installed on the input side and the output side of the frame 1 and are connected through the lower chain transmission mechanism 96, and the input end lower power drum group 92 is located below the input end upper power drum group 91, and the output end lower power drum group 94 is located below the output end upper power drum group 93; the upper high-temperature cloth bar 97 is fixed on the upper chain transmission mechanism 95; the lower high-temperature cloth bar is fixed on the lower chain transmission mechanism 96; the upper high-temperature cloth is fixed on the upper high-temperature cloth bar 97 and is draped over the airbag type heating laminating device 2; the lower high-temperature cloth is fixed on the lower high-temperature cloth bar and is draped over the lower heating plate 4, thereby forming a conveying channel between the upper high-temperature cloth and the lower high-temperature cloth, and the solar cell module is placed in the conveying channel.

To further optimize the technical solution of this disclosure, the airbag contact type single-layer dual-chamber laminator includes a transition plate 10, and the transition plate 10 is installed at a junction of the two frames 1 and is located inside the lower high-temperature cloth to improve transmission reliability.

The embodiment of the present disclosure further provides an airbag contact type single-layer dual-chamber laminator system, which includes a feeding table 101, a discharging table 102, and the airbag contact type single-layer dual-chamber laminator as described above, and the feeding table 101 and the discharging table 102 are respectively located on an input side and an output side of the airbag contact type single-layer dual-chamber laminator. The disclosure integrates feeding, laminating, and discharging functions into one system, which provides a continuous production process, reduces labor and improves production efficiency.

The descriptions of various embodiments in this specification are presented progressively, highlighting differences from other embodiments. Identical or similar parts among the embodiments are cross-referenced. For devices disclosed in the embodiments, since they correspond to the methods disclosed, descriptions are kept brief, referring to method explanations for details.

The disclosure enables professionals in the field to implement or use this disclosure. Various modifications will be apparent to those skilled in the art, and the general principles defined herein may be applied in other embodiments without departing from the spirit or scope of this disclosure. Therefore, this disclosure is not limited to the embodiments shown but extends to the broadest range consistent with the principles and novel features disclosed herein.

## Claims

1. An airbag contact type laminator, comprising a frame, an airbag type heating laminating device, a plurality of hydraulic cylinders, a lower heating plate, and a vacuum and inflation system, wherein the airbag type heating laminating device is installed on the frame through the plurality of peripheral hydraulic cylinders; the lower heating plate is horizontally fixed on a support frame of the frame and corresponds to a position of the airbag type heating laminating device thereabove, thus forming a vacuum laminating chamber when the airbag type heating laminating device presses against the lower heating plate; the vacuum and inflation system is connected to and in communication with the airbag type heating laminating device, and also communicates with the vacuum laminating chamber through the lower heating plate.

2. The airbag contact type laminator according to claim 1, wherein the airbag type heating laminating device comprises a side frame, an upper heating plate, a plurality of airbags, an aluminum plate, and a silicone rubber pad, a body of each the hydraulic cylinder is vertically installed on the frame, and a piston rod of each the hydraulic cylinder is fixedly connected to the side frame through a connecting frame, when a bottom end of the side frame presses against the lower heating plate, the vacuum laminating chamber is formed inside the side frame; the upper heating plate is located at a top of the side frame and is connected by a fastening component; tops of the plurality of airbags are fixedly connected to the upper heating plate and evenly distributed, the vacuum and inflation system is connected to the plurality of airbags; the aluminum plate is installed at bottom ends of the plurality of airbags; the silicone rubber pad is laid at a bottom of the aluminum plate.

3. The airbag contact type laminator according to claim 2, wherein a top end and a bottom end of the side frame both have sealing grooves, and sealing rings are installed in both sealing grooves.

4. The airbag contact type laminator according to claim 2, wherein the vacuum and inflation system comprises a vacuum pump, a vacuum connection pipeline, a first vacuum pipeline, a second vacuum pipeline, a corrugated expansion pipe, a vacuum inflation pipeline, and a compressed air system, one end of the vacuum connection pipeline is connected to the vacuum pump, and the other end is connected to the first vacuum pipeline and the second vacuum pipeline through a tee joint, the first vacuum pipeline has a first electromagnetic valve installed, and the second vacuum pipeline has a second electromagnetic valve installed; a plurality of extension ends of the first vacuum pipeline communicate with the vacuum laminating chamber through a plurality of suction holes in the lower heating plate; an extension end of the second vacuum pipeline communicates with the vacuum inflation pipeline through the corrugated expansion pipe; a plurality of extension ends of the vacuum inflation pipeline penetrate the upper heating plate and communicates with the plurality of airbags respectively; the vacuum inflation pipeline has a third electromagnetic valve installed; the compressed air system connects to and communicates with the vacuum inflation pipeline through the second vacuum pipeline and the corrugated expansion pipe, and the compressed air system is connected to the second vacuum pipeline near an output end.

5. The airbag contact type laminator according to claim 4, wherein the upper heating plate comprises three upper heating plate units, the three upper heating plate units are arranged sequentially along the top of the side frame; correspondingly, the aluminum plate comprises three aluminum plate units, the three aluminum plate units are respectively installed at bottoms of the plurality of airbags on the three upper heating plate units; the silicone rubber pad comprises three silicone rubber pad units, the three silicone rubber pad units are respectively laid and fixed at bottoms of the three aluminum plate units; the vacuum inflation pipeline comprises three vacuum inflation pipeline units and a total input pipeline, a top end of the corrugated expansion pipe connects to the three vacuum inflation pipeline units respectively through the total input pipeline, and each the vacuum inflation pipeline unit has a third electromagnetic valve installed.

6. The airbag contact type laminator according to any claim of claim 2 to claim 5, wherein both the upper heating plate and the lower heating plate are electrically connected to an electromagnetic heating control cabinet located outside the frame through a plurality of heat-resisting conductors.

7. An airbag contact type single-layer dual-chamber laminator, comprising a conveying mechanism and two the airbag contact type laminators as described in any claim of claim 2 to claim 6, wherein the two airbag contact type laminators are arranged from left to right in alignment; the conveying mechanism is installed on the frames of the two airbag contact type laminators to form a conveying channel between the side frame and the lower heating plate.

8. The airbag contact type single-layer dual-chamber laminator according to claim 7, wherein the conveying mechanism comprises an input end upper power drum group, an input end lower power drum group, an output end upper power drum group, an output end lower power drum group, an upper chain transmission mechanism, a lower chain transmission mechanism, an upper high-temperature cloth bar, a lower high-temperature bar, an upper high-temperature cloth, and a lower high-temperature cloth, the input end upper power drum group and the output end upper power drum group are respectively installed on an input side and an output side of the frame and are connected through the upper chain transmission mechanism; the input end lower power drum group and the output end lower power drum group are respectively installed on the input side and the output side of the frame and are connected through the lower chain transmission mechanism, and the input end lower power drum group is located below the input end upper power drum group, and the output end lower power drum group is located below the output end upper power drum group; the upper high-temperature cloth bar is fixed on the upper chain transmission mechanism; the lower high-temperature cloth bar is fixed on the lower chain transmission mechanism; the upper high-temperature cloth is fixed on the upper high-temperature cloth bar and is draped over the airbag type heating laminating device; the lower high-temperature cloth is fixed on the lower high-temperature cloth bar and is draped over the lower heating plate, thereby forming a conveying channel between the upper high-temperature cloth and the lower high-temperature cloth.

9. The airbag contact type single-layer dual-chamber laminator according to claim 8, further comprising a transition plate, wherein the transition plate is installed at a junction of the two frames and is located inside the lower high-temperature cloth.

10. An airbag contact type single-layer dual-chamber laminator system, comprising a feeding table, a discharging table, and the airbag contact type single-layer dual-chamber laminator as described in any claim of claim 7 to claim 9, wherein the feeding table and the discharging table are respectively located on an input side and an output side of the airbag contact type single-layer dual-chamber laminator.
